Europäisches Patentamt

European Patent Office

Office européen des brevets

(19)

(11) **EP 0 466 646 B1**

(12) **EUROPÄISCHE PATENTSCHRIFT**

(45) Veröffentlichungstag und Bekanntmachung des
Hinweises auf die Patenterteilung:
**28.08.1996 Patentblatt 1996/35**

(51) Int Cl.[6]: **C08K 9/10**, C09B 67/08,
C08L 23/02

(21) Anmeldenummer: **91810518.0**

(22) Anmeldetag: **02.07.1991**

(54) **Verfahren zum verzugsfreien Pigmentieren von Polyolefinen**

Process for distortion-free pigmentation of polyolefins

Procédé de pigmentation des polyoléfines sans distorsion

(84) Benannte Vertragsstaaten:
**BE CH DE DK ES FR GB IT LI NL SE**

(30) Priorität: **11.07.1990 CH 2313/90
14.09.1990 CH 2990/90**

(43) Veröffentlichungstag der Anmeldung:
**15.01.1992 Patentblatt 1992/03**

(73) Patentinhaber: **CIBA-GEIGY AG
4002 Basel (CH)**

(72) Erfinder:
• **Bugnon, Philippe, Dr.
CH-1724 Essert (CH)**
• **Herren, Fritz, Dr.
CH-3186 Düdingen (CH)**

(56) Entgegenhaltungen:
EP-A- 0 296 107   DE-A- 3 327 562
DE-A- 3 613 257   US-A- 3 904 562
US-A- 4 049 615

**Beschreibung**

Die vorliegende Erfindung betrifft ein Verfahren zum verzugsfreien Pigmentieren von Polyolefinen durch Verwendung von mit polaren Polymeren beschichteten organischen Pigmenten.

Bei der Einfärbung von Polyolefinen, insbesondere von Polyethylen, mit organischen Pigmenten stellt man häufig fest, daß sich mit der Zeit eine Reihe der mechanischen Eigenschaften des eingefärbten Materials verändert: Es treten Störungen auf, die man zusammenfassend als Verzugserscheinungen bezeichnet. Bei großvolumigen Spritzgußteilen, wie Flaschenkästen, aus Polyethylen hoher Dichte kann man beispielsweise Verformungen und Schrumpfungen beobachten, die manchmal Rißbildungen führen und die Artikel meistens unbrauchbar machen. Oft tritt auch nach verhältnismäßig kurzer Gebrauchsdauer eine Versprödung des Materials ein. Diese Nachteile beziehen sich auf die Mehrzahl der organischen Pigmente, während sich die anorganischen Pigmente und eine Minderzahl von organischen Pigmenten neutral verhalten. Es wird angenommen, daß diese Nachteile dadurch zustande kommen, daß das typische Kristallisationsverhalten der Polyolefine durch die Anwesenheit der Pigmente gestört wird, da diese als Nukleierungszentren wirken können.

Es sind bereits verschiedene Methoden vorgeschlagen worden, die es erlauben sollten, diesen Nachteilen auszuweichen. Meistens beziehen sich diese Methoden jeweils auf bestimmte Pigmentklassen. Zu verzugsfreien Färbungen von Polyolefinen gelangt man z.B. gemäß US-Patent 4 233 206 durch Verwendung von mit Carbonsäuren veresterte Methylolgruppen enthaltenden organischen Pigmenten (insbesondere Kupferphthalocyaninen); gemäß JP-Kokai 53-124555, US-Patent 4 107 133 und JP-Kokai 53-143646 durch Verwendung eines mit einem Silankuppler behandelten Isoindolinon- bzw. Kupferphthalocyaninpigments; gemäß JP-Kokai 53-132048 durch Verwendung eines Isoindolinonpigmentes mit dem Zusatz eines Salicyloylhydrazids; gemäß JP-Kokai 57-73029 durch Verwendung eines Pigments der Chinacridon-, Isoindolinon-, Azo- oder Phthalocyaninreihe, welches auf anorganisches Material (z.B. Kieselgel) adsorbiert und danach mit einem Silan- oder Titankuppler behandelt wird; gemäß JP-Kokai 57-159831 durch Verwendung eines mit einem Phenylen-bis-tetrachlorbenzamid behandelten Isoindolinonpigments; gemäß JP-Kokai 58-23840 durch Verwendung eines Phthalocyaninpigments mit einem Zusatz eines mit einem Amin behandelten Halogenmethylkupferphthalocyanins und gemäss EP-A-0296107 durch Verwendung von mit einer Schicht aus vernetzter Ethylcellulose versehenen organischen Pigmenten.

Eine Verbesserung der Verzugseigenschaften von Isoindolinonpigmenten kann gemäß JP-Kokai 57-51733 und 57-155242 auch durch eine Rekristallisation des Pigments erreicht werden. Die dabei erzielte Erhöhung der mittleren Teilchengrösse ist allerdings, wie in Fachkreisen allgemein bekannt, mit einer Einbusse anderer wichtiger Pigmenteigenschaften, insbesondere der Farbstärke, verbunden.

Das US-Patent 4 049 615 beschreibt ein Verfahren zum verzugsfreien Färben von Polyolefinen durch Verwendung eines mit einem Melamin-Formaldehyd-Harz überzogenen organischen Pigments, insbesondere eines Perylen-, Perinon-, Bisazo- oder Isoindolinonpigments.

Diese Methoden genügen nicht immer den hohen Anforderungen der modernen Technik und führen je nach Pigment nicht zum erwünschten Resultat. So ist beispielsweise noch keine Methode bekannt, die es erlauben würde, Diketopyrrolopyrrolpigmente zum verzugsfreien Pigmentieren von Polyolefinen einzusetzen.

Die Beschichtung von Pigmenten mit polaren Polymeren ist an sich bekannt. So sind z.B. aus dem US-Patent 3 806 464 Pigmente, z.B. Kupferphthalocyanin-, Chinacridon-, Azo-, Thioindigo- und Flavanthronpigmente, bekannt, deren Teilchen mit einer bestimmten Acrylpolymerzusammensetzung überzogen sind, die aus Verträglichkeitsgründen zum Einfärben der heute in der Automobilindustrie vermehrt eingesetzten Acryllacke besonders geeignet sind.

Aus der DE-A-2 200 322 sind Polyvinylalkohol-Pigmentzusammensetzungen bekannt, die z.B. als Aquarellfarben geeignet sind.

Das US-Patent 3 904 562 beschreibt Polyvinylpyrrolidon-Pigmentzusammensetzungen, welche in Bezug auf Hitzebeständigkeit, Bluten und Glanz Vorteile in Überzugsmitteln zeigen.

Obwohl die Beschichtung von Pigmenten mit polaren Polymeren bereits bekannt ist, wurde der Einfluß derartiger Pigmente auf die Verzugseigenschaften beim Einfärben von Polyolefinen bisher nicht erkannt.

Es wurde nun gefunden, daß praktisch alle organischen Pigmente und insbesondere die Diketopyrrolopyrrolpigmente sich überraschend gut zum verzugsfreien Pigmentieren von Polyolefinen eignen, wenn sie direkt oder indirekt mit einer Schicht eines polaren Polymeren überzogen werden.

Die Erfindung betrifft demnach ein Verfahren zum verzugsfreien Pigmentieren von Polyolefinen dadurch gekennzeichnet, daß ein organisches Pigment aus der Azo-, Diketopyrrolopyrrol-, Perylen-, Chinacridon-, Phthalocyanin-, Perinon-, Chinophthalon-, Isoindolinon-, Benzimidazolon-, Dioxazin-, Anthrachinon-, Thioindigo-, Methin-, Azomethin- oder Metallkomplexreihe verwendet wird, dessen Teilchenoberfläche mit einer Schicht eines polaren Polymeren oder mit mehreren Schichten von polaren Polymeren überzogen ist, wobei es sich bei den polaren Polymeren um solche ausgewählt aus der Gruppe bestehend aus linearen oder verzweigten Homo- oder Copolymeren der Klasse der

- Acrylpolymere auf Basis von Acrylsäure, Methacrylsäure und/oder deren Alkylestern,

- Polyvinylalkohole,
- Polyvinylpyrrolidone sowie
- Maleinsäureanhydrid/Styrol-Copolymere

handelt.

Die obengenannten Polymere werden z.B. in einer Menge von 0,5 bis 20, bevorzugt 1 bis 10 Gew.%, bezogen auf das Pigment, eingesetzt.

Die obengenannten Acrylpolymere können gegebenenfalls durch Einbau von Derivaten der Säuren, wie z.B. Amiden, sowie durch die Verwendung weiterer Comonomere, wie Styrol, Acrylnitril, Vinylacetat, Vinylphosphonate, Vinylpropionat, Vinylchlorid, Itaconsäure, Maleinsäure und deren Derivate oder anderer $\alpha,\beta$-ungesättigter Verbindungen nach allgemein üblichen Methoden modifiziert werden (vgl. z.B. Ullmanns Encyclopädie der technischen Chemie, Band 19, S. 1 ff, insbesondere S.7, 4. Auflage).

Als Alkylester der erfindungsgemäss einzusetzenden Acryl- und Methacrylsäure kommen zweckmäßig Methyl-, Ethyl-, n-Propyl-, Isopropylester sowie Hydroxymethyl- und Hydroxyethylester in Frage, wobei zusätzlich auch kleinere Mengen an langkettigen Alkylestern vorhanden sein können (langkettiges Alkyl bedeutet z.B. verzweigtes oder unverzweigtes Octyl, Nonyl, Decyl, Dodecyl, Hexadecyl oder Octadecyl). Bevorzugt sind Methylester.

Unter den Polyvinylalkoholen, die als Überzug von besonderem Interesse sind, eignen sich die allgemein bekannten Polyvinylalkohole, die gegebenenfalls durch Ester, Ether oder Acetalgruppen modifiziert sind, sowie polyvinylalkoholhaltige Copolymere, wie z.B. Blockcopolymere mit Polyvinylalkoholsegmenten. Bevorzugte Polyvinylalkohole sind jene mit einem Hydrolysegrad über 80 %, insbesondere zwischen 85 und 99,8 %, und einem Polymerisationsgrad von 200 bis 2500, insbesondere 250 bis 1800 (MG ca. 10000-100000).

Auch die Polyvinylpyrrolidone können durch Verwendung von Copolymeren wie Styrol, Acrylnitril, Vinylpropionat, Vinylchlorid und insbesondere Vinylacetat modifiziert werden. Bevorzugte Polyvinylpyrrolidone sind jene mit einem Molekulargewicht zwischen 5000 und 500000.

Unter Copolymeren auf Basis von Maleinsäureanhydrid/Styrol werden solche mit einem Verhältnis von Maleinsäureanhydrid: Styrol von 1:1 bis 1:3 bevorzugt.

Die Beschichtung des Pigments kann grundsätzlich nach 2 allgemein bekannten Methoden erfolgen: durch Adsorption eines bereits gebildeten, löslichen Polymers oder Oligomers auf dem Pigment oder durch Polymerisation entsprechender Monomere in Gegenwart des Pigments. Letztere Methode kann insbesondere bei Verwendung von Acrylpolymeren eingesetzt werden.

Im ersten Fall wird das zu behandelnde Pigment in wäßriger Suspension mit dem polaren Polymer unter Rühren nachbehandelt. Dabei kann vom trockenen Pigmentpulver, einem Preßkuchen oder einer aus der Synthese anfallenden Suspension ausgegangen werden. Das Polymer kann entweder vorgängig mit Wasser gelöst werden oder fest der Pigmentsuspension zugegeben werden. Falls nötig kann die Suspension nach üblichen Methoden mit einem Dispergieraggregat (z.B. einem Hochdruckhomogenisator oder einem Hochgeschwindigkeitsrührer) dispergiert werden. Meistens ist dies nicht nötig, da die polaren Polymeren im allgemeinen sehr gute benetzende Eigenschaften besitzen. Der Pigmentgehalt in der Suspension kann in weiten Grenzen variiert werden und kann gegebenenfalls bis zu 40 Gew.% betragen. Zweckmäßig setzt man Suspensionen mit 5 bis 20 Gew.% Pigment ein. Die Nachbehandlung des Pigments mit dem polaren Polymeren kann bei Raumtemperatur, gegebenenfalls aber auch bei bis zu ca. 80°C erhöhter Temperatur, durchgeführt werden. Die Rührdauer variiert zwischen 5 Minuten und 20 Stunden. Zur Erleichterung der Filtration des behandelten Pigments können auch Filtrationshilfsmittel, wie z.B. 0,5 bis 15 Gew.% einer aliphatischen 1,2-Dihydroxyverbindung mit 8 bis 22 C-Atomen, insbesondere 1 bis 5 Gew.% 1,2-Dodecandiol, eingesetzt werden, sofern diese keine negative Wirkung bei der Verwendung der erfindungsgemäßen Pigmente (insbesondere in Polyethylen) zeigen. Analoge Zusätze (z.B. übliche Dispergiermittel) können auch in üblichen Mengen zur Verbesserung der Dispergierbarkeit des Produktes zugesetzt werden. Das Polymer kann auch durch Zugabe eines Fällungsmittels (z.B. NaCl oder $Na_2SO_4$) auf das Pigment aufgefällt werden oder Pigment und Polymer werden zusammen in Gegenwart einer genügenden Menge Lösungsmittel, um das Polymer wenigstens teilweise zu lösen, z.B. in einer Kugel- oder Sandmühle vermahlen. Gegebenenfalls ist auch eine Vernetzung des Polymeren nach üblichen Methoden zweckmäßig. Als Vernetzungsmittel können dabei beispielsweise borhaltige Verbindungen (z.B. Borsäure oder Natriumborat), Metallverbindungen (z.B. Zirkonpropylat, Aluminiumsalze), bifunktionelle Reaktanden (z.B. Dicarbonsäuren, Dicarbonsäurechloride) verwendet werden.

Im Allgemeinen handelt es sich um bekannte Beschichtungsmethoden, wie sie z.B. in den US-Patenten 3 532 662, 3 806 464, 3 876 603 und 3 904 562 beschrieben sind.

Im zweiten Fall, d.h. bei Polymerisation von Monomeren in Gegenwart eines Pigments, kann unbehandeltes Pigment in Anlehnung an bekannte Methoden, wie sie z.B. in den US-Patenten 3 133 893 und 3 897 586 beschrieben sind, oder zur Verbesserung der Adsorption des Polymers vorbehandeltes Pigment eingesetzt werden. Verschiedene Vorbehandlungen dieser Art sind üblich und in Fachkreisen wohlbekannt. Einige davon sind z.B. in den US-Patenten 3 544 500, 3 891 572, 4 608 401, 4 680 200 und 4 771 086 beschrieben. In Analogie zu einer im US-Patent 3 884 871

3

beschriebenen Methode können auch copolymerisationsfähige Monomere (z.B. Vinylmonomere enthaltend polare Gruppen, wie beispielsweise -COOH, -SO$_3$H, -NH$_2$, -OH, -CONH$_2$ usw.) durch Vorbehandlung auf dem Pigment adsorbiert werden.

Für das erfindungsgemässe Verfahren bevorzugt zu verwendende polare Polymere sind Polyvinylpyrrolidone und insbesondere Polyvinylalkohole. Der Überzug ist dabei vorzugsweise einschichtig.

Auch Kombinationen von polaren Polymeren können erfindungsgemäß eingesetzt werden. So besteht z.B. eine weitere und neue, für das verzugsfreie Färben von Polyolefinen vorteilhafte Pigmentbeschichtung, die ebenfalls Gegenstand dieser Erfindung ist, darin, dass eine Acrylpolymerschicht über eine auf die Teilchenoberfläche des Pigments adsorbierte Polyvinylalkoholschicht aufgetragen wird. Die Herstellung erfolgt z.B. durch Adsorption von Polyvinylalkohol auf das Pigment in einer wäßrigen Pigmentdispersion unter Rühren während 5 Minuten bis 4 Stunden bei Raumtemperatur und nachfolgende radikalisch initiierte Emulsionspolymerisation der Acryl- und gegebenenfalls der Comonomeren in Gegenwart des vorbehandelten Pigments ebenfalls unter Rühren während 1 bis 4 Stunden, aber bei Temperaturen zwischen 60 und 100, bevorzugt 70 und 90°C, in Analogie zu den bereits oben erwähnten Verfahren. Dabei wird vorzugsweise das Acrylpolymer in Mengen von 1 bis 5 und das Polyvinylalkohol in Mengen von 0,5 bis 8 Gew. %, bezogen auf das Pigment, eingesetzt

Bei den obenerwähnten Methoden erfolgt die Polymerisation der ungesättigten Monomeren nach verschiedenen üblichen Methoden, z.B. in wäßriger Emulsion unter Einsatz von Persulfat als Initiator. Andere gängige Polymerisationsverfahren (z.B. in Lösungsmitteln) sowie andere verbreitet eingesetzte Initiatoren, wobei die Polymerisation sowohl thermisch, wie auch photochemisch gestartet werden kann, sind natürlich auch einsetzbar (vgl. z.B. Comprehensive Polymer Science (Pergamon Press), Vol. 3 + 4, oder Ullmann, Bd. 19, Seiten 1-15).

Pigmente, die sich für das erfindungsgemäße Verfahren besonders eignen, sind z.B. jene der Azo-, Diketopyrrolopyrrol-, Perylen-, Chinacridon-, Phthalocyanin- oder Isoindolinonreihe, bevorzugt die Diketopyrrolopyrrole und insbesondere 1,4-Diketo-3,6-di-(4-chlorphenyl)-pyrrolo-[3,4-c]-pyrrol.

Der große und überraschende Vorteil des erfindungsgemässen Verfahrens liegt darin, daß Polyolefine, insbesondere Polyethylen hoher Dichte, mit hochechten organischen Pigmenten eingefärbt werden können, die bisher für diesen Zweck nicht oder zumindest weniger gut geeignet waren.

Die Prüfung der Verzugsbeeinflussung von Polyolefin durch ein Pigment erfolgt an einem Spritzgußfertigteil in Form einer Platte. Nach einer Alterung von 72 Stunden bei 100°C werden die Dimensionen der Platte (Länge, Breite) ausgemessen und der Verzug $\Delta L$ (Länge) und $\Delta B$ (Breite) in ‰ nach folgenden Gleichungen ermittelt:

$$\Delta L = \frac{\text{L farbloser Prüfling - L pigmentierter Prüfling}}{\text{L farbloser Prüfling}} \times 1000$$

$$\Delta B = \frac{\text{B farbloser Prüfling - B pigmentierter Prüfling}}{\text{B farbloser Prüfling}} \times 1000$$

Als in der Praxis verzugsfrei haben sich Pigmente erwiesen, bei denen die absoluten Werte von $\Delta L$ und $\Delta B$ kleiner als 5 liegen; besonders bevorzugt sind Werte kleiner als 3.

Die nachfolgenden Beispiele erläutern die Erfindung.

Beispiel 1: 28 g eines 36%igen wäßrigen Preßkuchens von 1,4-Diketo-3,6-di-(4-chlorphenyl)-pyrrolo-[3,4-c]-pyrrol werden in 100 ml Wasser durch starkes Rühren bei Raumtemperatur während 45 Minuten dispergiert. Anschließend wird 1 g Polyvinylalkohol ®PVA15000 (FLUKA AG) - Polymerisationsgrad 300; Hydrolysegrad 86-89 % - zugegeben. Die Suspension wird 18 Stunden bei Raumtemperatur gerührt, anschließend filtriert und das Produkt wird bei 80°C getrocknet und pulverisiert.

Beispiel 2: Man verfährt wie in Beispiel 1, setzt aber statt PVA 15000 1 g Polyvinylalkohol ®PVA72000 (FLUKA AG) - Polymerisationsgrad 1600; Hydrolysegrad 97,5-99,5 % - ein.

Beispiel 3: 35,5 g eines 42,2%igen wäßrigen Preßkuchens vom β-Kupferphthalocyaninpigment CI Pigment Blau 15:3 werden in 113 ml Wasser in Anwesenheit von 1,5 g Polyvinylalkohol ®PVA15000 (FLUKA AG) durch Rühren über Nacht mit einem Zahnscheibenrührer dispergiert. Anschließend wird das erhaltene Produkt filtriert, nacheinander mit Wasser und Aceton gewaschen und in einem Vakuumtrockenschrank getrocknet.

Beispiel 4: 15 g des Azopigments CI Pigment Rot 166 werden in 134 ml Wasser und 0,75 g Polyvinylalkohol ®PVA15000 (FLUKA AG) mit einem Zahnscheibenrührer dispergiert und anschließend 17 Stunden weitergerührt. Das erhaltene Produkt wird filtriert, mit Wasser gewaschen und im Vakuumtrockenschrank bei 80°C getrocknet.

Beispiel 5: 15 g des Isoindolinonpigments CI Pigment Gelb 110 werden in 133 ml Wasser mit einem Zahnscheibenrührer dispergiert. Unter Rühren werden dann 1,5 g Polyvinylalkohol ®PVA15000 (FLUKA AG) als Pulver zugegeben. Die Suspension wird über Nacht weitergerührt. Anschließend wird das erhaltene Produkt filtriert, nacheinander mit Wasser und Aceton gewaschen und im Vakuumtrockenschrank getrocknet.

Beispiel 6: 5 g des α-Chinacridonpigments CI Pigment Violett 19 werden mit 45 ml Wasser und 0,25 g Polyvinylalkohol ®PVA15000 (FLUKA AG) durch starkes Rühren (®Ultraturrax) während einer Stunde dispergiert. Danach werden 50 ml einer 1M Na$_2$SO$_4$-Lösung innert 30 Minuten zugegeben. Die Suspension wird dann filtriert, der Rückstand wird mit Wasser gewaschen, bei 80°C getrocknet und gesiebt.

Beispiel 7: 5 g des Chinacridonpigments CI Pigment Rot 202 werden in 45 ml Wasser mit 0,25 g Polyvinylalkohol ®PVA15000 (FLUKA AG) durch starkes Rühren (®Ultraturrax) während einer Stunde dispergiert. Die Suspension wird auf 80°C erwärmt, dann werden 0,105 g in 10 ml Wasser gelöste Borsäure langsam zugetropft und der pH wird anschliessend mit 1N NaOH auf 8,5 erhöht. Nach 2 Stunden Rühren wird filtriert, der Rückstand wird mit Wasser gewaschen, bei 80°C getrocknet und gesiebt.

Beispiel 8: 800 g eines 39,4%igen wäßrigen Preßkuchens von 1,4-Diketo-3,6-di-(4-chlorphenyl)-pyrrolo-[3,4-c]-pyrrol und 15,75 g Polyvinylpyrrolidon (K15; FLUKA AG) werden in 2665 ml Wasser durch starkes Rühren (®Ultraturrax) bei Raumtemperatur während 20 Minuten dispergiert. Die Suspension wird 16 Stunden bei Raumtemperatur gerührt, anschließend filtriert und der Rückstand wird bei 80°C getrocknet und pulverisiert.

Beispiel 9: Man verfährt wie in Beispiel 8 beschrieben, ersetzt aber die 800 g Diketopyrrolopyrrolpigmentpreßkuchen durch 315 g des Isoindolinonpigments CI Pigment Gelb 110 in Pulverform.

Beispiel 10: 20 g des β-Kupferphthalocyaninpigments CI Pigment Blau 15:3 und 1 g Polyvinylpyrrolidon (K15; FLUKA AG) werden in 200 ml Wasser und 20 ml Ethanol durch starkes Rühren (®Ultraturrax) bei Raumtemperatur während 20 Minuten dispergiert. Die Suspension wird 16 Stunden bei Raumtemperatur gerührt, anschließend filtriert und der Rückstand wird bei 80°C getrocknet und pulverisiert.

Beispiel 11: 80,2 g eines 37,4%igen wäßrigen Preßkuchens von 1,4-Diketo-3,6-di-(4-chlorphenyl)-pyrrolo-[3,4-c]-pyrrol werden mit 1,5 g Polyvinylpyrrolidon-vinylacetatcopolymer ®PVP/VA I735 (GAF) in 250 ml Wasser durch starkes Rühren (®Ultraturrax) bei Raumtemperatur während 1 Stunde dispergiert. Die Suspension wird 18 Stunden bei Raumtemperatur gerührt, anschließend filtriert und der Rückstand wird bei 80°C getrocknet und pulverisiert.

Beispiel 12: 25,4 g eines 39,4%igen wäßrigen Preßkuchens von 1,4-Diketo-3,6-di-(4-chlorphenyl)-pyrrolo-[3,4-c]-pyrrol werden mit 65 ml Wasser und 10 g einer 4%igen ammoniakalischen Lösung von Styrol-Maleinsäureanhydrid-Copolymer (SMA 1440, Atochem) durch starkes Rühren bei Raumtemperatur während zwei Stunden dispergiert. Dann wird der pH mit 0,1N HCl auf 6 eingestellt. Danach wird die Suspension 2 Stunden weitergerührt, anschließend filtriert und der Rückstand wird mit Wasser gewaschen, bei 80°C getrocknet und pulverisiert.

Beispiel 13: 40,1 g eines 37,4%igen wäßrigen Preßkuchens von 1,4-Diketo-3,6-di-(4-chlorphenyl)-pyrrolo-[3,4-c]-pyrrol und 15 g einer 5%igen wäßrig-ethanolischen Lösung von Methylmethacrylat-Methacrylsäure-Copolymer werden in 95 ml Wasser durch starkes Rühren bei Raumtemperatur dispergiert und danach 19 Stunden gerührt. Die Suspension wird dann filtriert und der Rückstand wird bei 80°C getrocknet und gesiebt.

Beispiel 14: Man verfährt wie in Beispiel 13 beschrieben, ersetzt aber das Methylmethacrylat-Methacrylsäure-Copolymer mit der gleichen Menge Styrol-Acrylsäure-Copolymer.

Beispiel 15: 28 g eines 36%igen wäßrigen Preßkuchens von 1,4-Diketo-3,6-di-(4-chlorphenyl)-pyrrolo-[3,4-c]-pyrrol werden 2 Stunden bei Raumtemperatur in 70 ml Wasser enthaltend 0,5 g Polyvinylalkohol® PVA 15000 (FLUKA AG) gerührt. Anschließend werden, unter Stickstoff, 30 ml einer 0,67%igen Emulsion von Methylmethacrylat, 30 ml einer 0,83%igen wäßrigen Lösung von Methacrylsäure, sowie 25 ml einer 1,25%igen wäßrigen Lösung von Kaliumpersulfat zugegeben, wobei nach jeder Zugabe 8 Minuten gerührt wird. Die Suspension wird auf 80°C erhitzt und 3 Stunden bei dieser Temperatur gerührt. Anschließend wird abgekühlt, filtriert, mit Wasser gewaschen und bei 80°C im Vakuumtrockenschrank getrocknet.

Beispiel 16: 2 g des gemäß Beispiel 1 erhaltenen beschichteten Pigments werden mit 1 kg Polyethylen ®Stamilan 9089V in einem Taumelmischer während 10 Minuten trocken vermischt. Die Mischung wird anschließend in einem Einschneckenextruder 2 Mal bei 200°C extrudiert. Das so erhaltene Granulat wird auf einer Spritzgußmaschine bei 240°C zu Platten der Dimensionen 174x49x2,5 mm verarbeitet. Nach einer Alterung von 72 Stunden bei 100°C werden die Dimensionen der erfindungsgemäß pigmentierten Platte und einer unter identischen Bedingungen hergestellten, aber mit der gleichen Menge an unbeschichtetem Pigment pigmentierten Platte ausgemessen, und die Verzugsbeeinflussung wird nach der oben beschriebenen Methode ermittelt.

Im Vergleich zu der mit unbeschichtetem Pigment gefärbten Platte ergibt die nach dem erfindungsgemässen Verfahren hergestellte Platte stark reduzierte ΔL- bzw. ΔB-Werte.

Verfährt man wie oben beschrieben, aber mit der gleichen Menge an einem der gemäß den Beispielen 2 bis 15 erhaltenen Pigmenten, so erhält man eine Platte mit analog guten ΔL- bzw. ΔB-Werte.

**Patentansprüche**

1. Verfahren zum verzugsfreien Pigmentieren von Polyolefinen dadurch gekennzeichnet, daß ein organisches Pigment aus der Azo-, Diketopyrrolopyrrol-, Perylen-, Chinacridon-, Phthalocyanin-, Perinon-, Chinophthalon-, Isoindolinon-, Benzimidazolon-, Dioxazin-, Anthrachinon-, Thioindigo-, Methin-, Azomethin- oder Metallkomplexreihe verwendet wird, dessen Teilchenoberfläche mit einer Schicht eines polaren Polymeren oder mit mehreren Schichten von polaren Polymeren überzogen ist, wobei es sich bei den polaren Polymeren um solche ausgewählt aus der Gruppe bestehend aus linearen oder verzweigten Homo- oder Copolymeren der Klasse der

- Acrylpolymere auf Basis von Acrylsäure, Methacrylsäure und/oder deren Alkylestern,
- Polyvinylalkohole,
- Polyvinylpyrrolidone sowie
- Maleinsäureanhydrid/Styrol-Copolymere

handelt.

2. Verfahren gemäß Anspruch 1 dadurch gekennzeichnet, daß die Polymeren in einer Menge von 0,5 bis 20 Gew. % bezogen auf das Pigment, eingesetzt werden.

3. Verfahren gemäß Anspruch 1 dadurch gekennzeichnet, daß ein Pigment verwendet wird, dessen Teilchenoberfläche mit einer Schicht eines Homo- oder Copolymeren auf Basis von Acrylsäure, Methacrylsäure und/oder deren Alkylestern überzogen ist.

4. Verfahren gemäß Anspruch 1 dadurch gekennzeichnet, daß ein Pigment verwendet wird, dessen Teilchenoberfläche mit einer Schicht eines linearen oder verzweigten Homooder Copolymers der Klasse der Polyvinylalkohole überzogen ist.

5. Verfahren gemäß Anspruch 4 dadurch gekennzeichnet, daß ein Polyvinylalkohol mit einem Hydrolysegrad über 80 % und einem Polymerisationsgrad zwischen 200 und 2500 verwendet wird.

6. Verfahren gemäß Anspruch 1 dadurch gekennzeichnet, daß ein Pigment verwendet wird, dessen Teilchenoberfläche mit einer Schicht eines linearen oder verzweigten Homooder Copolymers der Klasse der Polyvinylpyrrolidone überzogen ist.

7. Verfahren gemäß Anspruch 6 dadurch gekennzeichnet, daß ein Polyvinylpyrrolidon mit einem Molekulargewicht zwischen 5000 und 500000 verwendet wird.

8. Verfahren gemäß Anspruch 3 dadurch gekennzeichnet, daß die Polymere durch Einbau von Derivaten der Säuren oder durch die Verwendung weiterer Comonomere modifiziert werden.

9. Verfahren gemäß Anspruch 1 dadurch gekennzeichnet, daß es sich bei den beschichteten Pigmenten um solche der Azo-, Diketopyrrolopyrrol-, Perylen-, Chinacridon-, Phthalocyanin- oder Isoindolinonreihe handelt.

10. Verfahren gemäß Anspruch 9 dadurch gekennzeichnet, daß die Pigmente der Diketopyrrolopyrrolreihe angehören, vorzugsweise, dass es sich dabei um 1,4-Diketo-3,6-di-(4-chlorphenyl)-pyrrolo-[3,4-c]pyrrol handelt.

11. Verfahren gemäß Anspruch 1 dadurch gekennzeichnet, daß das Pigment in einer Menge von 0,01 bis 5 Gew.%, bezogen auf das Polyolefin, eingesetzt wird.

12. Verfahren gemäß Anspruch 1 dadurch gekennzeichnet, daß das Polyolefin Polyethylen hoher Dichte ist.

13. Nach dem Verfahren gemäß Anspruch 1 pigmentiertes Polyolefin.

## Claims

1. A process for the warp-free pigmenting of polyolefins, wherein an organic pigment from the azo, diketopyrrolopyrrole, perylene, quinacridone, phthalocyanine, perinone, quinophthalone, isoindolinone, benzimidazolone, dioxazine, anthraquinone, thioindigo, methine, azomethine or metal complex series is used whose particles are coated on the surface with one or more films of polar polymers,
where the polar polymers are selected from the group consisting of linear or branched homopolymers or copolymers from the classes consisting of the

- acrylic polymers based on acrylic acid, methacrylic acid and/or alkyl esters thereof,
- polyvinyl alcohols,

- polyvinylpyrrolidones and
- maleic anhydride/styrene copolymers.

2. A process according to claim 1, wherein the polymers are employed in an amount of from 0.5 to 20 % by weight, based on the pigment.

3. A process according to claim 1, wherein a pigment is used whose particles are coated on the surface with a film of a homopolymer or copolymer based on acrylic acid, methacrylic acid and/or alkyl esters thereof.

4. A process according to claim 1, wherein a pigment is used whose particles are coated on the surface with a film of a linear or branched homopolymer or copolymer from the class of the polyvinyl alcohols.

5. A process according to claim 4, wherein a polyvinyl alcohol having a degree of hydrolysis of greater than 80 % and a degree of polymerization of between 200 and 2500 is used.

6. A process according to claim 1, wherein a pigment is used whose particles are coated on the surface with a film of a linear or branched homopolymer or copolymer from the class of the polyvinylpyrrolidones.

7. A process according to claim 6, wherein a polyvinylpyrrolidone having a molecular weight of between 5000 and 500,000 is used.

8. A process according to claim 3, wherein the polymers are modified by incorporating derivatives of the acids or by using further comonomers.

9. A process according to claim 1, wherein the coated pigment is from the azo, diketopyrrolopyrrole, perylene, quinacridone, phthalocyanine or isoindolinone series.

10. A process according to claim 9, wherein the pigment belongs to the diketopyrrolopyrrole series, and is preferably 1,4-diketo-3,6-di(4-chlorophenyl)pyrrolo[3,4-c]pyrrole.

11. A process according to claim 1, wherein the pigment is employed in an amount of from 0.01 to 5 % by weight, based on the polyolefin.

12. A process according to claim 1, wherein the polyolefin is high density polyethylene.

13. A polyolefin pigmented by the process according to claim 1.

**Revendications**

1. Procédé de pigmentation sans distorsion de polyoléfines, caractérisé en ce qu'on utilise un pigment organique azoïque, de dicétopyrrolopyrrole, de pérylène, de quinacridone, de phtalocyanine, de périnone, de quinophtalone, d'isoindolinone, de benzimidazolone, de dioxazine, d'anthraquinone, de thioindigo, de méthine, d'azométhine ou d'un complexe métallique dont la surface des particules est revêtue d'une couche d'un polymère polaire ou de plusieurs couches de polymères polaires, auquel cas, pour ce qui est des polymères polaires, il s'agit de ceux qui sont choisis parmi l'ensemble constitué d'homo- ou copolymères, à chaîne droite ou ramifiée, de la classe :

- des polymères acryliques à base d'acide acrylique, d'acide méthacrylique et/ou de leurs esters alkyliques,
- des poly(alcools vinyliques),
- des polyvinylpyrrolidones, et,
- des copolymères anhydride maléique/styrène.

2. Procédé selon la revendication 1, caractérisé en ce que les polymères sont utilisés en une quantité de 0,5 à 20 % en poids par rapport au pigment.

3. Procédé selon la revendication 1, caractérisé en ce qu'on utilise un pigment dont la surface des particules est revêtue d'une couche d'un homo- ou d'un copolymère à base d'acide acrylique, d'acide méthacrylique et/ou de leurs esters alkyliques.

4. Procédé selon la revendication 1, caractérisé en ce qu'on utilise un pigment dont la surface des particules est revêtue d'une couche d'un homo- ou d'un copolymère à chaîne droite ou ramifiée de la classe des poly-(alcools vinyliques).

5. Procédé selon la revendication 4, caractérisé en ce qu'on utilise un poly(alcool vinylique) ayant un degré d'hydrolyse supérieur à 80 % et un degré de polymérisation compris entre 200 et 2500.

6. Procédé selon la revendication 1, caractérisé en ce qu'on utilise un pigment dont la surface des particules est revêtue d'une couche d'un homo- ou d'un copolymère à chaîne droite ou ramifiée de la classe des polyvinylpyrrolidones.

7. Procédé selon la revendication 6, caractérisé en ce qu'on utilise une polyvinylpyrrolidone ayant une masse moléculaire comprise entre 5000 et 500 000.

8. Procédé selon la revendication 3, caractérisé en ce que les polymères sont modifiés par incorporation de dérivés des acides ou par utilisation d'autres comonomères.

9. Procédé selon la revendication 1, caractérisé en ce que, pour ce qui est des pigments revêtus, il s'agit de pigments azoïques, de dicétopyrrolopyrrole, de pérylène, de quinacridone, de phtalocyanine ou d'isoindolinone.

10. Procédé selon la revendication 9, caractérisé en ce que les pigments appartiennent à la série des dicétopyrrolopyrroles, et de préférence qu'il s'agit alors du 1,4-dicéto-3,6-di(4-chlorophényl)-pyrrolo[3,4-c]pyrrole.

11. Procédé selon la revendication 1, caractérisé en ce que le pigment est utilisé en une quantité de 0,01 à 5 % en poids par rapport à la polyoléfine.

12. Procédé selon la revendication 1, caractérisé en ce que la polyoléfine est un polyéthylène haute densité.

13. Polyoléfine pigmentée par le procédé selon la revendication 1.